Europäisches Patentamt

European Patent Office

Office européen des brevets

(11) Publication number: **0 197 159**
**B1**

(12) **EUROPEAN PATENT SPECIFICATION**

(45) Date of publication of patent specification: 27.06.90

(51) Int. Cl.⁵: **G 11 B 33/08**

(21) Application number: **85905102.1**

(22) Date of filing: **09.10.85**

(86) International application number:
**PCT/JP85/00557**

(87) International publication number:
**WO 86/02482 24.04.86 Gazette 86/09**

(54) **OPTICAL DISC PLAYER.**

(30) Priority: **11.10.84 JP 153438/84 u**

(43) Date of publication of application:
**15.10.86 Bulletin 86/42**

(45) Publication of the grant of the patent:
**27.06.90 Bulletin 90/26**

(84) Designated Contracting States:
**DE FR GB IT NL SE**

(56) References cited:
**EP-A-0 176 606          GB-A-1 015 848**
**WO-A-82/00383          JP-A-6 098 589**
**DE-A-2 547 849          JP-U-6 077 099**
**DE-B-1 109 392          US-A-3 578 304**
**FR-A-2 134 985          US-A-3 595 503**
**FR-A-2 218 508          US-A-3 874 646**

**PATENT ABSTRACTS OF JAPAN, vol. 6, no. 125
(P-127)1003r, 10th July 1982; & JP-A-57 50 331
(MATSUSHITA DENKI SANGYO K.K.) 24-03-1982**

**PATENT ABSTRACTS OF JAPAN, vol. 4, no. 171
(M-44)653r, 26th November 1980; & JP-A-55 123
032 (AISHIN SEIKI K.K.) 22-09-1980**

(73) Proprietor: **SONY CORPORATION**
**7-35 Kitashinagawa 6-Chome Shinagawa-ku
Tokyo 141 (JP)**

(72) Inventor: **YOSHITOSHI, You Sony Corporation**
**7-35, Kitashinagawa 6-chome Shinagawa-ku
Tokyo 141 (JP)**
Inventor: **TOYOGUCHI, Tsutomu Sony
Corporation**
**7-35, Kitashinagawa 6-chome Shinagawa-ku
Tokyo 141 (JP)**
Inventor: **TAKAMATSU, Ryoji Sony Corporation**
**7-35, Kitashinagawa 6-chome Shinagawa-ku
Tokyo 141 (JP)**
Inventor: **WATANABE, Yoshiro Sony
Corporation**
**7-35, Kitashinagawa 6-chome
Shinagawa-ku Tokyo 141 (JP)**

(74) Representative: **Thomas, Christopher Hugo
et al
D Young & Co 10 Staple Inn
London WC1V 7RD (GB)**

Courier Press, Leamington Spa, England.

## Description

This invention relates to optical disc players suitable for use in vehicles such as cars or aircraft.

In cassette magnetic tape players for cars, no vibration isolation is usually provided, even although the vibration of the car causes wow and flutter, because such degradation of the reproduction is not regarded as a very serious problem.

However, when an optical disc player for scanning and reproducing high-density signals recorded on a disc by an optical pick-up is mounted in a car or an aircraft, sound emissions tend to occur due to the vibration. Therefore, the main part of the player has been connected to a frame of the player by rubber cushions to reduce the vibration. However, the quality factor Q of the resonance region of the vibration generated in the main part of the player tends to be large, so that it is often difficult for the player to operate normally. In addition, the frequency band of the vibration caused under severe conditions in a car, normally includes the above resonance region.

Hence, an arrangement has been proposed (our European patent specification EP-A-0 176 602) in which a movable chassis, on which an optical pick-up and a turntable are mounted, is suspended by coiled springs from a frame, and dampers which prevent the chassis from vibrating are inserted between the frame and the chassis, so that the chassis floats with respect to the frame. Thus, the resonance frequency $f_o$ in the lateral (horizontal) direction of the system is decreased, the slope of the Q-value of the resonance region becomes more moderate, and the vibration isolation characteristic is greatly improved.

However, if this arrangement is mounted in a car with the frame at a given angle to the horizontal plane of the car, then as the orientation of the car changes, the direction of gravity acting on the movable chassis changes, so that the chassis tends to be displaced from a neutral equilibrium position with respect to the frame, and the vibration isolation characteristic is degraded.

According to the present invention there is provided an optical disc player comprising:

a frame;

a movable chassis carrying an optical pick-up and a turntable, supported by coiled springs connected to respective points in said frame so as to hold said chassis in a floating state with respect to said frame; and

dampers inserted between said frame and said chassis so as to absorb vibrational energy of said chassis; characterized by:

correcting means inserted between said frame and said chassis so as to permit change of a biasing force for biasing said chassis with respect to said frame by an adjustment operation;

whereby positional deviation of said chassis due to the setting angle of said frame from a neutral equilibrium position with respect to said frame can be corrected by changing the biasing force by said adjustment operation, so that said chassis can be kept in said neutral equilibrium position regardless of the setting angle of said frame.

The invention will now be described by way of example with reference to the accompanying drawings, throughout which like parts are referred to by like references, and in which:

Figure 1 is a perspective view of a chassis and a frame in an embodiment of optical disc player for cars, to which the present invention is applied;

Figure 2 is a front view of the chassis and frame taken along the line II-II in Figure 1;

Figure 3 is a sectional view of the player taken along the line III-III in Figure 1;

Figure 4 is a perspective view showing the overall arrangement of the player of Figure 1;

Figure 5 is a perspective view of a damper in Figure 1 in an enlarged and exploded state;

Figure 6A is a longitudinal sectional view of the damper in Figure 1 in the neutral equilibrium state;

Figure 6B is a sectional view of the damper taken along the line VIB-VIB in Figure 6A;

Figure 6C is a longitudinal sectional view similar to Figure 6A and showing a state wherein the damper is displaced from the neutral equilibrium position in the direction perpendicular to an axis thereof;

Figure 6D is a longitudinal sectional view similar to Figure 6A and showing a state wherein the damper is displaced from the neutral equilibrium position in the axial direction thereof;

Figure 7 is an enlarged plan view of a mounting state correction mechanism shown in Figure 1;

Figure 8 is a sectional view of the mounting state correction mechanism taken along the line VIII-VIII in Figure 7;

Figure 9 is an exploded perspective view of the mounting state correction mechanism of Figure 7;

Figure 10 is a view similar to Figure 3, wherein the player is mounted in a car at a given angle to the horizontal plane of the car with a coiled spring for correction not adjusted;

Figure 11 is a view similar to Figure 10, after the coiled spring for correction has been adjusted;

Figure 12 is a view similar to Figure 7, showing another example of the mounting state correction mechanism; and

Figure 13 is a sectional view of the mounting state correction mechanism taken along the line XIII-XIII in Figure 12.

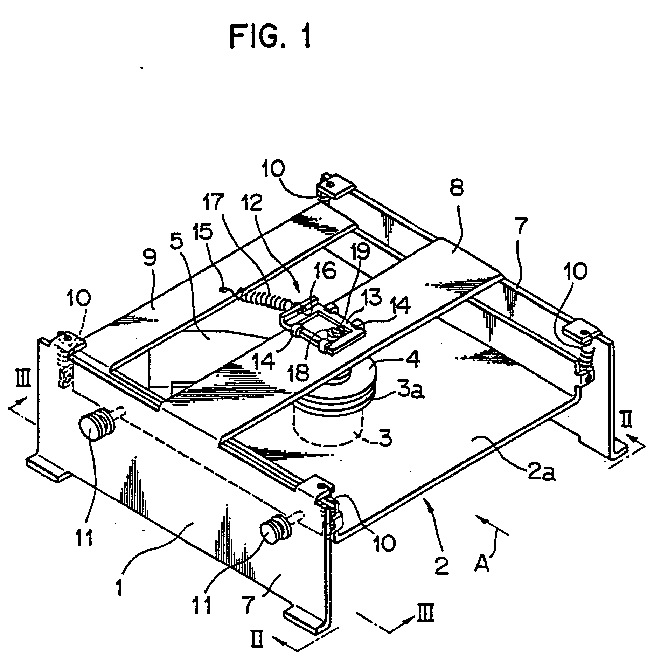

The embodiment to be described with reference to Figures 1 to 11 is an optical disc player for a car and comprises a frame 1, that is a stationary chassis, to which is connected the principal part 2 of the player comprising a movable chassis 2a, an optical pick-up 6 which is movable along a guide groove (not shown) formed in the movable chassis 2a, and a turntable 3a on which an optical disc (not shown) forming a recording medium is to be placed. On the movable chassis 2a, there is also mounted a motor 3. The disc is turned by the turntable 3a driven by the motor 3. The disc inserted in the direction of arrow A in Figure 1 is chucked by a disc chuck 4 rotatably mounted on the free end of a chucking arm 5 which is vertically swingable.

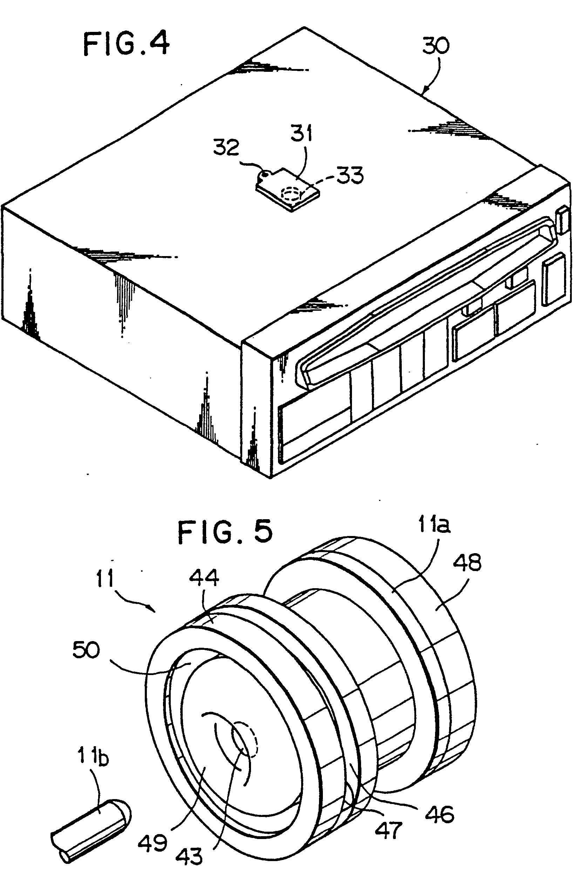

The frame 1 which is accommodated in a cabinet 30 (see Figure 4) and mounted in a player mounting position of the car, comprises a pair of side plates 7 and a connecting member 8 connecting the side plates 7 with each other. The movable chassis 2a is suspended from the frame 1 by four coiled springs 10. Four dampers 11 are inserted between the movable chassis 2a and the side plates 7 of the frame 1 near the respective coiled springs 10 so as to absorb the vibrational energy of the principal part 2 of the player, and keep it in a floating state with respect to the frame 1.

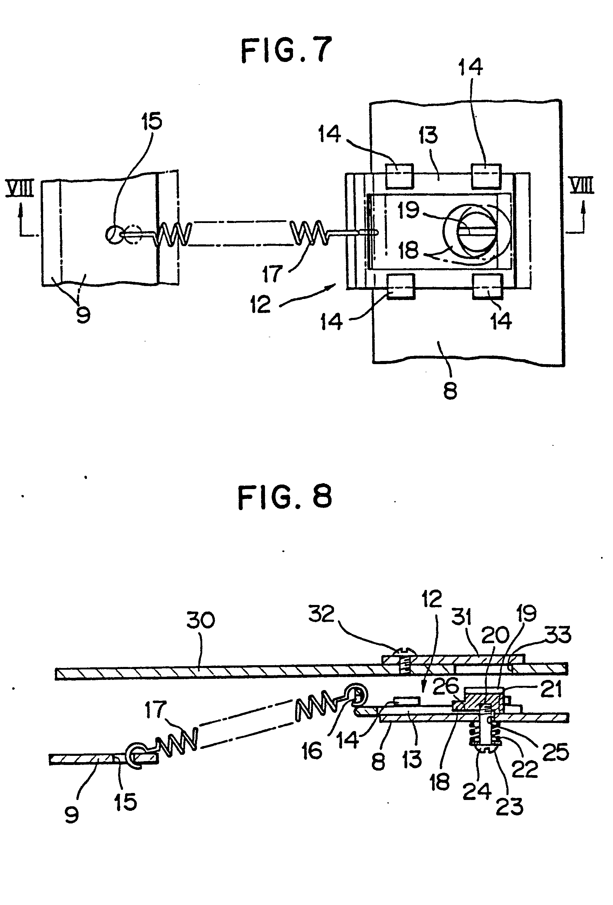

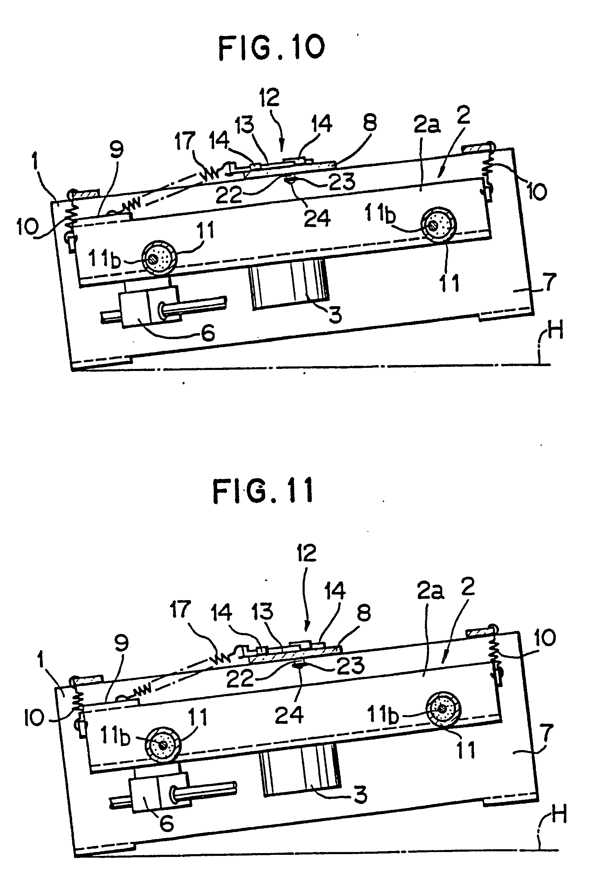

A mounting state correction mechanism 12 is disposed between the connecting member 8 of the frame 1 and an upper plate 9 of the movable chassis 2a, so as to change an equilibrium position of the principal part 2 of the player with respect to the frame 1 when the frame 1 is so secured as to have a given angle to the horizontal plane H of the car (see Figures 10 and 11). The mounting state correction mechanism 12 will be described later with reference to Figures 7 and 8.

Accommodated in the cabinet 30 shown in Figure 4 is the frame 1 to which the principal part 2 of the player is secured as shown in Figure 1. When a lid 31 is swung on a pivot 32, with which the lid 31 is attached to the upper wall of the cabinet 30, an adjustment operation opening 33 formed in the upper wall of the cabinet 30 is opened or closed, so that an eccentric cam 18 of the mounting state correction mechanism 12 can be turned with a screw-driver (not shown) inserted through the opening 33.

The constitution and function of the damper 11 will be described with reference to Figures 5 to 6D.

The damper 11 comprises a vessel 11a mounted on the side plate 7 of the frame 1, and a rod 11b fixedly fitted in a mounting hole 45 of the movable chassis 2a.

The vessel 11a is made of an elastic material such as rubber and defines a space 40 in which a viscous fluid is sealed. A movable member 41 is so disposed as to project into the substantially central portion of the space 40. The movable member 41 has the shape of a quadrangular prism, on the outer periphery of which projections 42 are disposed so as to increase viscous drag of the movable member 41, and into a hole 43 forming the inner periphery of which the rod 11b is press-fitted. The space 40 is defined by four walls which are in opposed relation to the outer periphery of the movable member 41, so that the space 40 has a substantially square cross-section. The rod 11b may comprise a rod body and a cylindrical body of rubber mounted on the rod body.

The vessel 11a has a lid 48 at the outer side thereof and a stop 44 in the form of a thick ring-like flange at the inner side thereof. Between the movable member 41 and the stop 44, there is disposed a film-like connecting member 49 which protrudes more than the stop 44, like a ring-doughnut. Between the stop 44 and the connecting member 49, there is an annular groove 50 of a substantially triangular shape in section, the width of which gradually decreases towards its bottom. A groove 46 is formed in the outer periphery of the stop 44 and is engaged with the rim of a hole 28 formed in the side plate 7 of the frame 1. A pair of projections 47 formed in the groove 46 are engaged with recesses (not shown) formed in the rim of the hole 28 in order to determine the setting angle of the vessel 11a in the side plate 7.

In this embodiment, silicone oil (12,000 cS) fills the space 40 formed in the body of the vessel 11a made of butyl rubber, and then the lid 48 of butyl rubber is attached to the vessel body so as to enclose the oil. The vessel 11a is mounted in the side plate 7 of the frame 1 in such a way that the pair of projections 47 of the vessel 11a are horizontally aligned with each other.

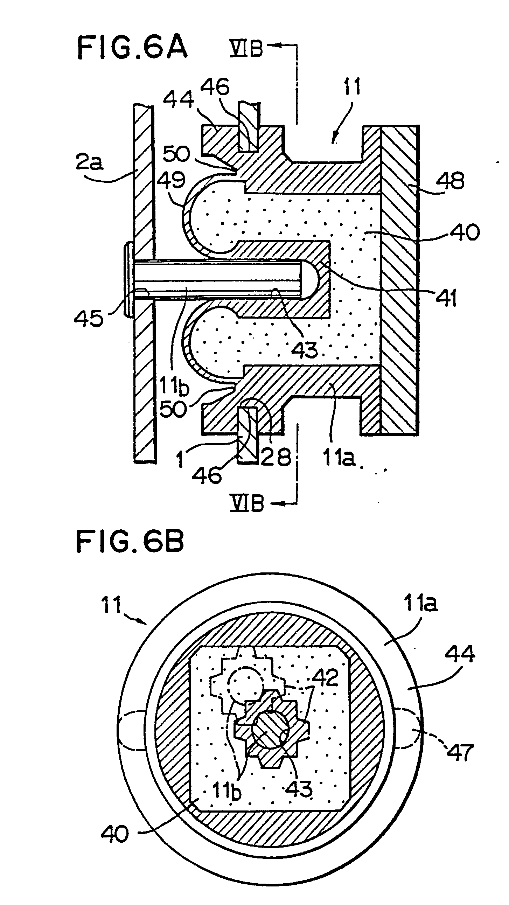

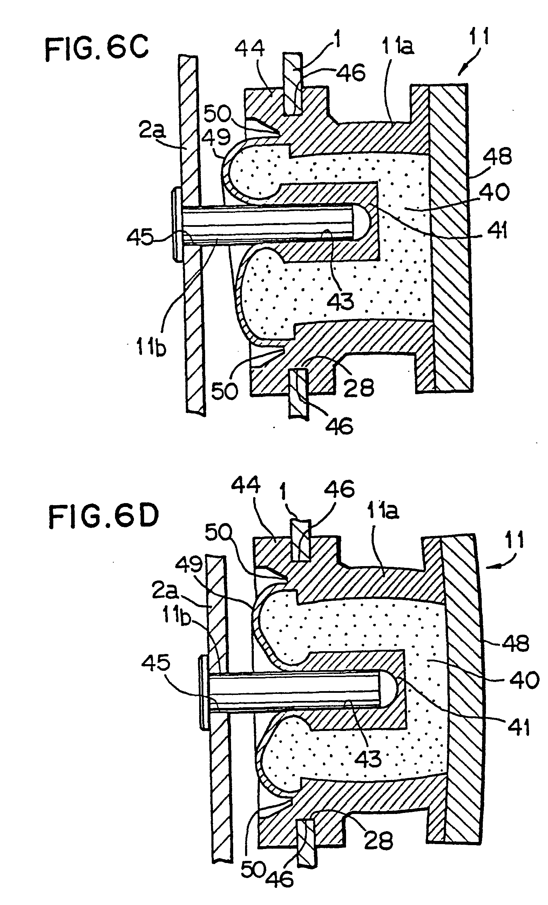

If the frame 1 is moved vertically, for example, moved downward with respect to the movable chassis 2a, the vessel 11a is also moved downward, that is, in a direction perpendicular to the axial direction thereof as shown in Figure 6C, and the rod 11b fixedly fitted in the mounting hole 45 of the movable chassis 2a is also to be moved downward together with the vessel 11a, but due to elastic deformation of the connecting member 49 made of the film, the rod 11b with the movable member 41 is relatively moved in the space 40 in three-dimensional directions. In other words, the rod 11b is not substantially moved and as shown in Figure 6C, the vessel 11a is so deformed as to move downward only the outer portion of the vessel 11a, such as the stop 44 and the like. Therefore, viscous drag is generated between the silicone oil and the movable member 41 since the silicone oil in the vessel 11a is moved from the lower position to the upper position of the movable member 41, so that the movable chassis 2a is prevented from transmitting the vibration of the framework 1, because the energy of the vibration is absorbed by the viscous drag.

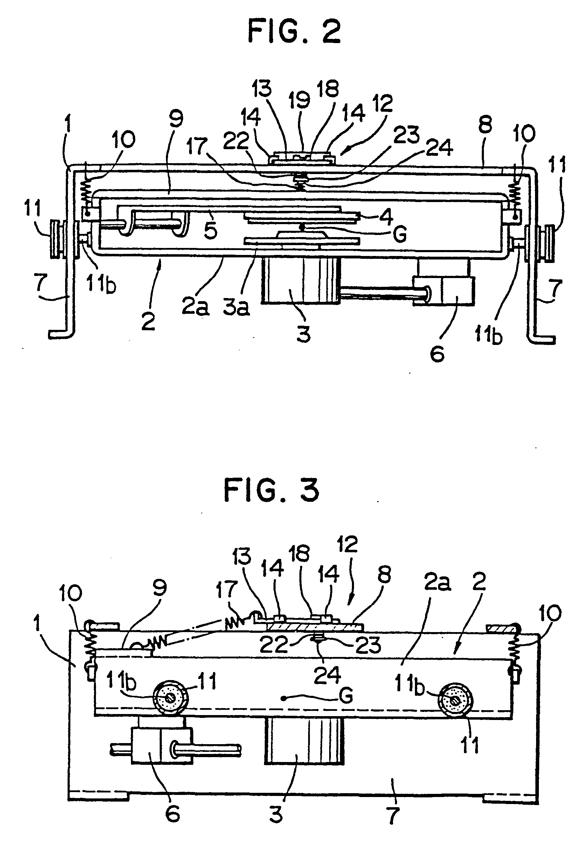

When the frame 1 vibrates in the back-and-forth direction (in the right-and-left direction in Figure 3) with respect to the movable chassis 2a, the vessel 11a is deformed in a similar way as indicated in Figure 6C. The vibration transmitted from the frame 1 to the movable chassis 2a is therefore cut, like the vertical vibration.

If the frame 1 vibrates in the right-and-left direction in Figure 2 with respect to the movable chassis 2a, the vessel 11a is so moved as to approach the movable chassis 2a as indicated in Figure 6D, so that the vibration transmitted from the frame 1 to the movable chassis 2a is cut due to the deformation of the vessel 11a shown in Figure 6D, and the same may be said of the vessel 11a moved away from the movable chassis 2a.

The stop 44 and lid 48 of the vessel 11a function as stop and impact absorbers when the vessel 11a is overrun in the axial direction of the damper 11 due to the vibration of the frame 1. That is, when the stop 44 of the vessel 11a comes closer to the movable chassis 2a from the state shown in Figure 6D, the movable chassis 2a is elastically brought into contact with the side surface of the stop 44. At the same time, the flat distal end of the movable member 41 is elastically brought into contact with the inner side of the lid 48. Therefore, the impact energy can be absorbed and further, the movement of the frame 7 towards the movable chassis 2a can be prevented.

The projections 42 of the movable member 41 function as stop and impact absorbers when the frame 1 vibrates in the vertical or back-and-forth direction thereof with respect to the movable chassis 2a. That is, as indicated in chain-dotted lines in Figure 6B, when the movable member 41 vibrates and comes relatively close to the upper wall of the space 40, the upper projection 42 is elastically brought into contact with the upper wall. As a result, the impact energy can be absorbed, and further displacement of the rod 11b relative to the vessel 11a can be prevented.

Differing from the conventional damper whose vessel has two spaces, the vessel 11a of the damper 11 comprises only one space 40 as mentioned above, and the vibrational energy is dissipated due to the movement of the movable member against the viscous fluid in the space 40. As the projection 42 protrudes from each of the four outer surfaces of the movable member 41 of the quadrangular prism, the surface of the movable member 41 is uneven, so that the energy dissipation due to the movement of the movable member 41 becomes larger, because the surface area of the movable member 41 immersed in the viscous fluid is effectively increased. Furthermore, since the vessel 11a is made of butyl rubber, the vessel 11a deforms repeatedly as the frame 1 vibrates with respect to the movable chassis 2a, so that the vibrational energy is dissipated in the butyl rubber. Therefore, the vessel 11a, in other words, the damper 11, has a large energy absorbing capacity even although it is rather small.

As shown in Figures 7 to 9, the mounting state correction mechanism 12 comprises a rectangular frame 13, two pairs of guide hooks 14 formed on the connecting member 8 of the frame 1 in order to have the rectangular frame 13 slide along the guide hooks 14, an eccentric cam 18 for causing the rectangular frame 13 to slide along the guide hooks 14, and a coiled spring 17 which joins engaging holes 16 and 15, respectively formed in the rectangular frame 13 and the upper plate 9 of the movable chassis 2a. The coiled spring 17 can give a biasing force of a predetermined magnitude to the movable chassis 2a so as to correct a positional deviation of the movable chassis 2a from the neutral equilibrium position with respect to the frame 1, when the frame 1 is mounted at a given angle relative to the horizontal plane. However, the coiled spring 17 has a low spring constant that it scarcely influences the vibration system which comprises the frame 1, the principal part 2 of the player, the suspension coiled springs 10 and the dampers 11 (whose frequency $f_0$ in the lateral (horizontal) direction is generally low).

The mounting state correction mechanism 12 is so arranged between the frame 1 and the movable chassis 2a as to have its central line, by which the mechanism 12 is symmetrically bisected into right and left portions, substantially in the perpendicular plane including the centre of gravity G of the principal part 2 of the player. The direction of the biasing force of the coiled spring 17 acting on the movable chassis 2a is always within the perpendicular plane, and the positional deviation of the movable chassis 2a from the neutral equilibrium position with respect to the frame 1 is kept substantially parallel to the perpendicular plane. In this embodiment, the coiled spring 17 is arranged at an angle of about 10° with the bottom surface of the movable chassis 2a, which is the reference surface of the principal part 2 of the player, when the principal part 2 of the player is held in the neutral equilibrium position.

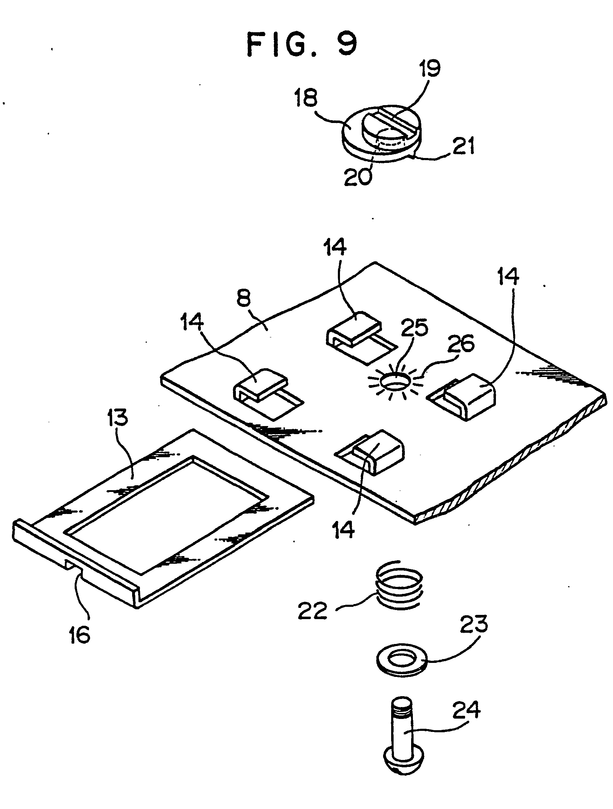

Formed in the head of the eccentric cam 18 is a notch which is to be engaged with a screwdriver. A screw hole 20 is formed in the bottom of the eccentric cam 18. A locking projection 21 is formed near the outer edge of the bottom surface. As is apparent from Figure 9, the eccentric cam 18 is secured with a screw 24, on which a washer 23 and a biasing spring 22 are mounted. Thus, the eccentric cam 18 is pressed against the connecting member 8 with the biasing spring 22, so that the locking projection 21 of the eccentric cam 18 is selectively engaged with one of a plurality of radial grooves formed around a hole 25 formed in the frame 1. Therefore, the eccentric cam 18 can be held at a desirable angular position.

The function of the mounting state correction mechanism 12 at the time when the frame 1 is mounted in the player mounting position of the car parallel to, or at a given angle to the horizontal plane H of the car, will be described with reference to Figures 3, 10 and 11.

When the frame 1 is mounted in the player mounting position of the car parallel to the horizontal plane H of the car, the principal part 2 of the player is held by the suspension coiled springs 10, the correcting coiled spring 17 and the dampers 11 in the neutral equilibrium position as shown in Figure 3. Therefore, no force is transmitted from the movable chassis 2a to the dampers 11.

If the frame 1 is mounted in the player mounting position at a given angle to the horizontal plane H of the car by adjusting the coiled spring 17 of the mounting state correction mechanism 12, the direction of gravity of the principal part 2 of the player acting on the bottom surface of the movable chassis 2a changes, so that the force from the movable chassis 2a is transmitted to the dampers 11, and then the dampers 11 deform as shown in Figure 10. Thus, the movable chassis 2a is deviated from the neutral equilibrium position with respect to the frame 1.

Therefore, if the eccentric cam 18 is turned with a screwdriver (not shown) inserted through the adjustment operation opening 33 so as to operate the mounting state correction mechanism 12 shown in Figure 7, the eccentric cam 18 and the rectangular frame 13 are moved from the position indicated in the solid lines to the position indicated in chain-dotted lines in Figure 7, and thereby the biasing force of the coiled spring 17 is increased and the movable chassis 2a is moved from the position indicated in solid lines to the position indicated in chain-dotted lines in Figure 7. Therefore, by properly adjusting the angular displacement of the eccentric cam 18 of the mounting state correction mechanism 12, it is easy to return the movable chassis 2a from the position shown in Figure 10 to the neutral equilibrium position shown in Figure 11.

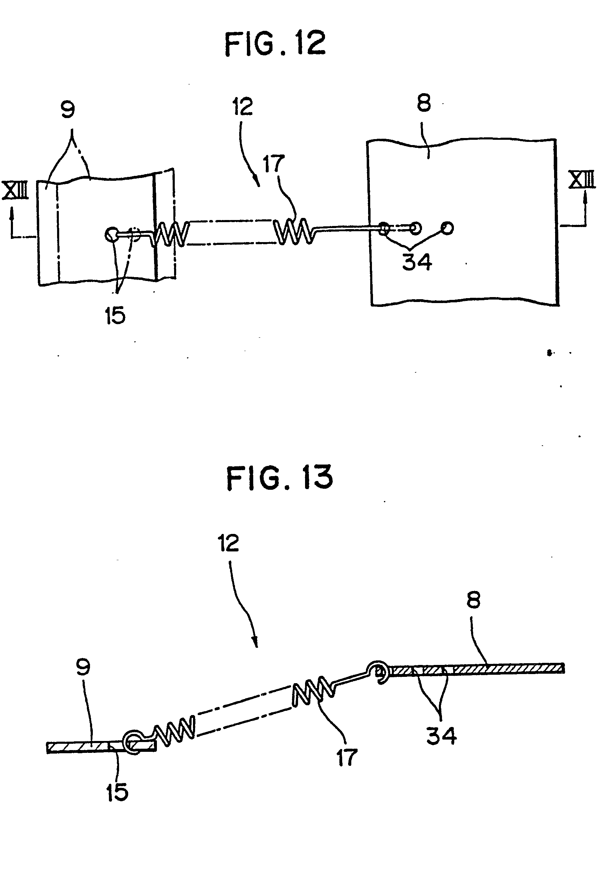

Figures 12 and 13 shown another example of the mounting state correction mechanism 12 shown in Figure 1. In this example, one end of the coiled spring 17 is hooked in one of a plurality of engaging holes 34 formed in a line in the connecting member 8 of the frame 1. By selectively hooking one end of the coiled spring 17 in one of the engaging holes 34, the biasing force of the coiled spring 17 can be changed like the mechanism illustrated in Figures 7 and 8.

If the arrangements shown in Figures 12 and 7 are compared, it is apparent that the mounting state correction mechanism 12 shown in Figures 12 and 13 is not only simpler in construction than the one shown in Figures 1 to 11, but also the coiled spring 17 can be larger than that of the mechanism 12 shown in Figures 1 to 11. Therefore, the mounting state correction mechanism 12 shown in Figures 12 and 13 are more suitable for an optical disc player for cars which is sometimes mounted parallel to and sometimes at a given angle to the horizontal plane of the car.

Various changes and modifications may be made. For example, in the example shown in Figures 12 and 13, the end of the coiled spring 17 may be engaged with the intermediate one of three engaging holes 34 arranged in a line, at the time when the frame 1 is mounted at a given angle to the horizontal plane, and the biasing force of the coiled spring 17 acts on the movable chassis 2a so as to hold the movable chassis 2a in the neutral equilibrium position. Thus, if the frame 1 is mounted in the player mounting position at an angle which is in a reverse relation with the angle shown in Figure 10, and the movable chassis 2a is displaced from the neutral equilibrium position not in the direction shown in Figure 10 but in the reverse direction, the adjustment can be performed by means of having the one end of the coiled spring 17 engaged the engaging hole 34 not far from, as shown in Figure 12, but near to the upper plate 9 of the movable chassis 2a. With this adjustment, the biasing force of the coiled spring 17 is decreased, so that the movable chassis 2a is moved from the position indicated in chain-dotted lines to the position indicated in solid lines in Figure 12 with respect to the frame 1. Therefore, the positional deviation of the movable chassis 2a from the neutral equilibrium position with respect to the frame 1, which is in the reverse relation with the displacement shown in Figure 10, can be corrected. Moreover, it is apparent that an operation opposite to that mentioned above will be enough to correct the position of the movable chassis 2a when the frame 1 is inclined further to the same side as that shown in Figure 10. In other words, the correcting operation can be performed with only one mounting state correction mechanism 12, even if the frame 1 is mounted in the player mounting position sometimes at the normal angle to and sometimes at the reverse angle to the horizontal plane of the car.

## Claims

1. An optical disc player comprising:
   a frame;
   a movable chassis (2a) carrying an optical pick-up (6) and a turntable (3a), supported by coiled springs (10) connected to respective points in said frame (1) so as to hold said chassis (2a) in a floating state with respect to said frame (1); and
   dampers (11) inserted between said frame (1) and said chassis (2a) so as to absorb vibrational energy of said chassis (2a); characterized by:
   correcting means (17) inserted between said frame (1) and said chassis (2a) so as to permit change of a biasing force for biasing said chassis (2a) with respect to said frame (1) by an adjustment operation;
   whereby positional deviation of said chassis (2a) due to the setting angle of said frame (1) from a neutral equilibrium position with respect to said frame (1) can be corrected by changing the biasing force by said adjustment operation, so that said chassis (2a) can be kept in said neutral equilibrium position regardless of the setting angle of said frame (1).

2. A player according to claim 1 wherein said frame (1) comprises a pair of side plates (7) and a connecting member (8) by which said pair of side plates (7) are connected with each other, said connecting member (8) being provided with adjusting means (18) capable of changing the biasing force of said correcting means (17) by said adjustment operation.

3. A player according to claim 2 wherein said adjusting means is an eccentric cam (18).

4. A player according to claim 1 or claim 2 wherein said correcting means (17) is a coiled spring (17).

5. A player according to any one of the preceding claims wherein said frame (1) is accommodated in a cabinet (30), in the upper wall of which an opening (33) for adjustment operation is formed in order to operate said adjusting means (18).

6. A player according to any one of the preceding claims wherein said damper (11) comprises a vessel (11a) of elastic material, a viscous fluid sealed in a space (40) defined by said vessel (11a), and a movable rod (11b) coupled to said vessel (11a), said vessel (11a) and said movable rod (11b) being mounted in one and the other of said frame (1) and said chassis (2a), respectively, said vessel (11a) being provided with a movable prism-like portion (41) projected into said space (40), a thick ring-shaped stop (44) spaced apart from the periphery of said movable portion (41), and a film-like connecting portion (49) formed between said stop (44) and said movable portion (41), said ring-shaped stopper (44) being provided with an abutting surface in opposed relation to a first abutting surface formed on said other of the frame (1) and said chassis (2a), a ring-like groove (50) being formed between said stop (44) and said connecting portion (49) in opposed relation to the first abutting surface, and said movable rod (11b) being fitted in said movable prism-like portion (41)

7. A player according to claim 6 wherein said viscous fluid is silicone oil.

**Patentansprüche**

1. Abspielgerät für optische Platten mit einem Rahmen (1),

einem beweglichen Chassis (2a), das einen optischen Abtaster (6) und einen Plattenteller (3a) trägt und mit Schraubenfedern (10) aufgehängt ist, die mit entsprechenden punkten des Rahmens (1) so verbunden sind, daß sie das Chassis (2a) gegenüber dem Rahmen (1) in schwimmendem Zustand halten, und

Dämpfern (11), die zwischen dem Rahmen (1) und dem Chassis (2a) derart angeordnet sind, daß sie die Vibrationsenergie des Chassis (2a) absorbieren, gekennzeichnet durch

Korrekturmittel (17), die zwischen dem Rahmen (1) und dem Chassis (2a) derart angeordnet sind, daß sie durch einen Einstellvorgang eine Änderung der Vorspannkraft ermöglichen, mit der das Chassis (2a) gegenüber dem Rahmen (1) vorgespannt ist, wodurch eine durch den Einbauwinkel des Rahmens (1) verursachte Positionsabweichung des Chassis (2a) gegenüber einer neutralen Gleichgewichtsposition relativ zu dem Rahmen (1) durch Änderung der Vorspannkraft mit Hilfe des genannten Einstellvorgangs korrigierbar ist, so daß das Chassis (2a) unabhängig von dem Einbauwinkel des Rahmens (1) in der neutralen Gleichgewichtsposition gehalten werden kann.

2. Abspielgerät nach Anspruch 2, bei dem der Rahmen (1) zwei Seitenplatten (7) und ein diese beiden Seitenplatten (7) miteinander verbindendes Verbindungsteil (8) besitzt, das mit Einstellmitteln (18) ausgestattet ist, die eine Änderung der Vorspannkraft der Korrekturmittel (17) durch den genannten Einstellvorgang ermöglichen.

3. Abspielgerät nach Anspruch 2, bei dem die Einstellmittel von einem Exzenternocken (18) gebildet sind.

4. Abspielgerät nach Anspruch 1 oder 2, bei dem die Korrekturmittel (17) von einer Schraubenfeder (17) gebildet sind.

5. Abspielgerät nach einem der vorhergehenden Ansprüche, bei dem der Rahmen (1) in einem Gehäuse (30) aufgenommen ist, in dessen Oberseite eine Öffnung (30) für die Durchführung des Einstellvorgangs zur Betätigung der Einstellmittel (18) vorgesehen ist.

6. Abspielgerät nach einem der vorhergehenden Ansprüche, bei dem der Dämpfer (11) einen Behälter (11a) aus elastischem Material, ferner eine in einem von diesem Behälter (11a) begrenzten Raum (40) verschlossene viskose Flüssigkeit sowie einen mit dem Behälter (11a) verbundenen beweglichen Stab (11b) aufweist, wobei der Behälter (11a) und der bewegliche Stab (11b) an dem einen bzw. dem anderen der beiden aus dem Chassis (2a) bzw. dem Rahmen (1) bestehenden Teile montiert ist und der Behälter (11a) einen in den genannten Raum (40) hineinragenden beweglichen prismatischen Abschnitt (41), einen im Abstand von der Peripherie dieses beweglichen Abschnitts (41) angeordneten dicken ringförmigen Anschlag (44) und einen zwischen diesem Anschlag (44) und dem beweglichen Abschnitt (41) ausgebildeten filmartigen Verbindungsabschnitt (49) aufweist, wobei der ringförmige Anschlag (44) eine Anschlagfläche besitzt, die einer ersten, an dem anderen der beiden aus dem dem Rahmen (1) und dem Rahmen (1) bestehenden Teile ausgebildeten Anschlagfläche gegenüberliegt, wobei ferner zwischen dem Anschlag (44) und dem Verbindungsabschnitt in einer der ersten Anschlagfläche gegenüberliegenden Position eine ringförmige Nut (50) ausgebildet ist, und wobei der bewegliche Stab (11b) in den beweglichen prismatischen Abschnitt (41) eingesetzt ist.

7. Abspielgerät nach Anspruch 6, bei dem die viskose Flüssigkeit Silikonöl ist.

**Revendications**

1. Lecteur de disque optique, comprenant:
un cadre,
un châssis mobile (2a) portant un capteur optique (6) et un plateau tournant (3a), et supporté par des ressorts hélicoïdaux (10) raccordés à des emplacements respectifs du cadre (1) afin que le châssis (2a) soit maintenu à l'état flottant par rapport au cadre (1), et
des amortisseurs (11) introduits entre le cadre (1) et le châssis (2a) afin qu'ils absorbent l'énergie vibrationnelle du châssis (2a), caractérisé par
un dispositif de correction (17) placé entre le cadre (1) et le châssis (2a) afin qu'il permette un changement d'une force de rappel du châssis (2a) par rapport au cadre (1) au cours d'une opération de réglage,
si bien que l'écart de position du châssis (2a) dû à l'angle de montage du cadre (1) par rapport à une position neutre d'équilibre relative au cadre (1), peut être corrigé par changement de la force de rappel au cours de l'opération de réglage, et que le châssis (2a) peut être maintenu en position neutre d'équilibre indépendamment de l'angle de montage du cadre (1).

2. Lecteur selon la revendication 1, dans lequel le cadre (1) comporte deux plaques latérales (7) et un organe de raccordement (8) raccordant les deux plaques latérales (7) l'une à l'autre, l'organe de raccordement (8) ayant un dispositif de réglage (18) permettant le changement de la force de rappel du dispositif de correction (17) au cours de l'opération de réglage.

3. Lecteur selon la revendication 2, dans lequel le dispositif de réglage est une came excentrique (18).

4. Lecteur selon la revendication 1 ou 2, dans lequel le dispositif de correction (17) est un ressort hélicoïdal (17).

5. Lecteur selon l'une quelconque des revendications précédentes, dans lequel le cadre (1) est logé dans un coffret (30) à la paroi supérieure duquel est formée une ouverture (33) destinée à permettre l'opération de réglage afin que le dispositif de réglage (18) puisse être manoeuvrée.

6. Lecteur selon l'une quelconque des revendications précédentes, dans lequel l'amortisseur (11) comporte une enveloppe (11a) d'un matériau élastique, un fluide visqueux scellé dans un espace (40) délimité par l'enveloppe (11a), et une tige mobile (11b) couplée à l'enveloppe (11a), l'enveloppe (11a) et la tige mobile (11b) étant montées chacune dans le cadre (1) ou dans le châssis (2a), l'enveloppe (11a) ayant une partie mobile (41) analogue à un prisme, dépassant dans ledit espace (40), une butée épaisse (44) de forme annulaire, placée à distance de la périphérie de la partie mobile (41), et une partie de raccordement (49) analogue à un film et formée entre la butée (44) et la partie mobile (41), la butée de forme annulaire (44) ayant une surface de butée placée en face d'une première surface de butée formée sur le châssis (2a) ou le cadre (1) respectivement, une gorge de forme annulaire (50) étant formée entre la butée (44) et la partie de raccordement (49) en face de la première surface de butée, et la tige mobile (11b) étant logée dans la partie mobile en forme de prisme (41).

7. Lecteur selon la revendication 6, dans lequel le fluide visqueux est une huile de silicone.

# FIG. 1

# FIG. 2

# FIG. 3

2

FIG.4

32 31
33
30

FIG. 5

11a
48
11
44
50
11b
49 43 47 46

## FIG.6A

## FIG.6B

FIG.6C

FIG.6D

# FIG. 7

# FIG. 8

# FIG. 9

# FIG.10

# FIG.11

8

# FIG. 12

# FIG. 13